# EUROPÄISCHE PATENTANMELDUNG

(11) **EP 4 745 444 A1**
(43) Veröffentlichungstag der Anmeldung: **20.05.2026**
(21) Anmeldenummer: 24213671.1
(22) Anmeldetag: 18.11.2024
(51) Int. Cl.: F16L 3/10, H01R 4/64

(54) **VORRICHTUNG ZUR BEFESTIGUNG EINES ROHRES**

(71) Anmelder: WALTER STAUFFENBERG GMBH & CO. KG, 58791 Werdohl (DE)
(72) Erfinder: EPP, Elena, 58849 Herscheid (DE); KÖNIG, Ulrich, 58849 Herscheid (DE)
(74) Vertreter: Patentanwälte Dörner & Kötter PartG mbB

(57) **Zusammenfassung**

Die Erfindung betrifft eine Vorrichtung zur Befestigung eines Rohres, insbesondere für Rohrleitungen im Bereich von Offshore- und Onshore-Ölgewinnungsanlagen, umfassend zwei korrespondierende, im Wesentlichen aus Kunststoff hergestellte, miteinander verbindbare, blockförmige Schellenteile (1), die Ausnehmungen (11) aufweisen, welche im montierten Zustand eine Durchführung (10) ausbilden, wobei wenigstens eine der beiden Schellenteile (1) mit einem elektrisch leitenden Erdungsleiter (2) versehen ist, der in die Ausnehmung hineinragt (11) und sich bis auf die der Ausnehmung (11) gegenüberliegende Deckfläche (15) erstreckt.

## Beschreibung

Die Erfindung betrifft eine Vorrichtung zur Befestigung eines Rohres nach dem Patentanspruch 1.

Im Bereich von Offshore- und Onshore-Ölgewinnungsanlagen sind regelmäßig Rohrleitungen angeordnet, die oberhalb des Wasserspiegels, aber auch unterhalb des Wasserspiegels verlaufen. Solche Rohrleitungen, oftmals als Instrumentationsleitungen bezeichnet, müssen aus Sicherheitsgründen regelmäßig geerdet werden. Die Erdung der mit Schellen an einer Befestigungsstruktur befestigten Rohrleitungen erfolgt über ein spezielles Erdungskabel, das mit einem Ende Ende zwischen Schelle und Rohr eingeklemmt und mit dem anderen Ende mit der Befestigungsstruktur oder mit elektrisch mit der Befestigungsstruktur verbundenen Metallteilen der Schelle verbunden wird.

Die Herstellung der erforderlichen Erdungskabel erweist sich jedoch als aufwendig. Da die jeweilige Ausführung von der Rohr- und Schellengröße abhängig ist, muss diese durch den Monteur berücksichtigt werden. Darüber hinaus erweist sich der Montageaufwand in kalten oder gar arktischen Gebieten für die Monteure als sehr aufwändig, insbesondere in Verbindung mit dicken und dadurch unhandlichen Kälteschutzhandschuhen, die das Handling erheblich erschweren.

Hier setzt die vorliegende Erfindung an. Der Erfindung liegt die Aufgabe zu Grunde, eine Vorrichtung zur Befestigung eines Rohres, insbesondere für Rohrleitungen im Bereich von Offshore- und Onshore-Ölgewinnungsanlagen, bereitzustellen, die einfach zu montieren ist und dabei eine zuverlässige Erdung der Rohrleitung gewährleistet. Gemäß der Erfindung wird diese Aufgabe durch eine Vorrichtung mit den Merkmalen des Patentanspruchs 1 gelöst.

Mit der Erfindung ist eine Vorrichtung zur Befestigung eines Rohres, insbesondere für Rohrleitungen im Bereich von Offshore- und Onshore-Ölgewinnungsanlagen, geschaffen, die einfach zu montieren ist und dabei eine zuverlässige Erdung der Rohrleitung gewährleistet. Dadurch, dass wenigstens eine der beiden Schellenteile mit einem elektrisch leitenden Erdungsleiter versehen ist, der in die Ausnehmung hineinragt und sich bis auf die der Ausnehmung gegenüberliegende Deckfläche erstreckt, ist bei Aufnahme eines Rohres zwischen den beiden Schellenpaaren unmittelbar eine elektrische Verbindung zwischen dem Erdungsleiter und dem Rohr erzielt. Ein separates Einklemmen eines Erdungsleiters zwischen einem Schellenteil und dem Rohr ist nicht erforderlich.

Bevorzugt sind beide Schellenteile mit einem elektrisch leitenden Erdungsleiter versehen. Hierdurch ist die Bauteilvielfalt vermindert. Einer Fehlmontage auf der Baustelle durch Verwendung von Schellenteilen ohne Erdungsleitung, was zu Folge hätte, dass die erforderliche Erdung des aufgenommenen Rohres nicht erzielt wird, ist hierdurch entgegengewirkt.

Unter einem blockförmigen Schellenteil ist vorliegend ein Schellenteil zu verstehen, das eine im Wesentlichen quaderförmige Form aufweist und das im Montierten Zustand mit dem weiteren blockförmigen Schellenteil wiederum eine quaderförmige Form ausbildet. Durch die blockförmige Ausbildung der Schellenteile ist eine große Länge der Ausnehmung und hierdurch eine großer Befestigungsbereich für ein aufzunehmendes Rohr erzielt. Weiterhin weist ein blockförmiges Schellenteil eine große Anlagefläche auf, wodurch eine lagestabile Befestigung an einer Befestigungsstruktur ermöglicht ist.

Um zugleich einen großen Öffnungsquerschnitt für einen Durchfluss von Luft und/oder Wasser für eine gute Ventilation zu ermöglichen, weisen die Schellenteile vorzugsweise in der Ausnehmung Längsrippen zur Anlage an einem aufzunehmenden Rohr auf. Die effektive Kontaktfläche zwischen Schellenteil und Rohr ist so reduziert. Größere Flächen zwischen Rohr und Schellenteil, in denen sich korrosionsfördernde Feuchtigkeit halten kann, sind hierdurch vermieden. An Stelle von Längsrippen können jegliche sonstige Erhebungen in der Ausnehmung vorhanden sein, durch die eine möglichst geringe Kontaktfläche zwischen dem Schellenteil und dem Rohr bewirkt ist.

In Weiterbildung der Erfindung ist der Erdungsleiter aus einem federnden Metall hergestellt und weist im Bereich der Ausnehmung wenigstens eine federnde Erhebung auf. Hierdurch ist ein zuverlässiger Kontakt zwischen Erdungsleiter und Rohr gewährleistet. Durch die wenigstens eine federnde Erhebung ist zugleich die effektive Kontaktfläche zwischen Schellenteil, Erdungsfeder und Rohr reduziert, wodurch wiederum eine gute Ventilation gewährleistet ist. Einer Korrosionsbildung ist hierdurch weiter entgegengewirkt.

In Ausgestaltung der Erfindung weist der Erdungsleiter zumindest bereichsweise einen rechteckigen Querschnitt auf. Hierdurch ist eine große Kontaktfläche erzielt. Bevorzugt weist der Erdungsleiter jedenfalls im Bereich der Ausnehmung des Schellenteils und/oder im Bereich der Deckfläche des Schellenteils einen rechteckigen Querschnitt auf. Hierdurch ist eine große Kontaktfläche zur Anlage an dem aufzunehmenden Rohr und/oder einem Montagebauteil erzielt. Besonders bevorzugt weist der gesamte Erdungsleiter rechteckigen Querschnitt auf.

In weiterer Ausgestaltung der Erfindung erstreckt sich der Erdungsleiter in Längsrichtung zumindest bereichsweise über die Länge der Ausnehmung. Hierdurch ist eine hinreichende Kontaktfläche erzielt. Bevorzugt erstreckt sich der Erdungsleiter über die gesamte Länge der Ausnehmung.

In weiterer Ausgestaltung der Erfindung ist der Erdungsleiter in Art einer Klammer ausgebildet ist, welche die Deckfläche und die sich daran anschließend Seiten des Schellenteils zumindest bereichsweise einfassend mit dem Schellenteil verbunden ist. Hierdurch ist eine kraft- und/oder formschlüssige Befestigung des Erdungsleiters an dem Schellenteil erzielt, wodurch eine einfache Montage ohne zusätzliche Befestigungsmittel ermöglicht ist.

In Weiterbildung der Erfindung weisen die beiden Schellenteile wenigstens eine zueinander fluchtende Bohrung zur Durchführung einer Schraube auf, wobei ein zumindest bereichsweise metallisches Montagebauteil zur Befestigung an einer Befestigungsstruktur angeordnet ist, an dem der Erdungsleiter elektrisch verbindend anliegt und das wenigstens ein Innengewinde zum Einschrauben einer Schraube aufweist. Hierdurch ist eine Befestigung der durch die beiden Schellenteile gebildeten Schelle an einer Befestigungsstruktur ermöglicht, bei der zugleich eine Anlage des an der Deckfläche des dem Montagebauteil zugewandten Schellenteils befindlichen Abschnitts des Erdungsleiters erfolgt, wodurch der Erdungsleiter elektrisch mit dem Montagebauteil verbunden ist. Eine separate Erdungsleitung zur Erdung des Rohres ist nicht erforderlich. Zur Gewährleistung eines kontinuierlichen elektrischen Kontaktes zwischen dem Montagebauteil und dem Erdungsleiter einerseits sowie der Befestigungsstruktur andererseits ist das Montagebauteil bevorzugt vollständig aus Metall hergestellt.

In Ausgestaltung der Erfindung ist das Montagebauteil durch eine Montageplatte gebildet, die wenigstens ein Innengewinde zum Einschrauben einer Befestigungsschraube aufweist. Diese Montageplatte, die sich über die gesamte Deckfläche des an dieser anliegenden Schellenteils erstreckt, kann mit der Befestigungsstruktur beispielsweise verschweißt, vernietet oder verschraubt sein.

In einer anderen Ausgestaltung der Erfindung ist das Montagebauteil durch eine C-Profilschiene gebildet, die wenigstens einen ein Innengewinde zum Einschrauben einer Befestigungsschraube aufweisenden Nutenstein aufnimmt. Hierdurch ist eine Änderung der Position in Längsrichtung des Montagebauteils bei gleichzeitiger Sicherstellung der elektrischen Verbindung zwischen dem Montagebauteil und der Erdungsleitung des an diesem anliegenden Schellenteils erzielt. Die Erdungsleitung verläuft hierbei quer zu dem Längsschlitz der C-Profilschiene.

In Weiterbildung der Erfindung ist dem Montagebauteil gegenüberliegend eine Spannplatte angeordnet, die wenigstens eine Bohrung aufweist, die mit dem wenigstens einen Innengewinde des Montagebauteils fluchtet, wobei die beiden Schellenteile zwischen der Spannplatte und dem Montagebauteil gegeneinander verspannt sind. Hierdurch ist eine zuverlässige Klemmung des Rohres zwischen den beiden Schellenteilen erzielt. Bevorzugt ist die Spannplatte derart dimensioniert, dass sie sich über die gesamte Deckfläche des an dieser anliegenden Schellenteils erstreckt.

Gegenstand der Erfindung ist weiterhin eine Befestigungsanordnung mit einer Vorrichtung der vorstehend beschriebenen Art nach dem Patentanspruch 10. Hierbei ist der Erdungsleiter bevorzugt federnd gegen das Rohr vorgespannt, wodurch ein kontinuierlicher elektrischer Kontakt zwischen Erdungsleiter und Rohr gewährleistet ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

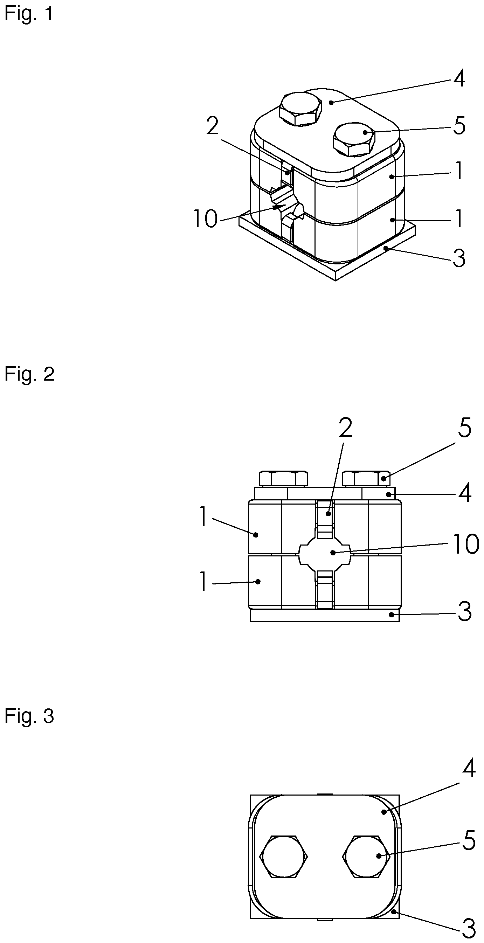

- Figur 1:: die schematische räumliche Darstellung einer Vorrichtung zur Befestigung eines Rohres;
- Figur 2:: die Darstellung der Vorrichtung aus Figur 1 in der Seitenansicht;
- Figur 3:: die Darstellung der Vorrichtung aus Figur 1 in der Draufansicht und

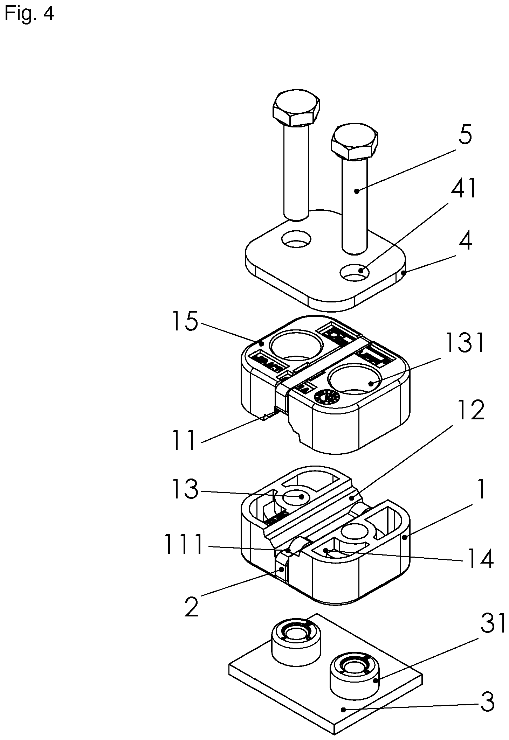

- Figur 4:: die Vorrichtung aus Figur 1 in Explosionsdarstellung.

Die als Ausführungsbeispiel gewählte Vorrichtung zur Verbindung zweier Rohrstücke besteht aus zwei identisch ausgebildeten Schellenteilen 1, die jeweils mit einem Erdungsleiter 2 versehen sind und die zwischen einer Montageplatte 3 und einer Spannplatte 4 über zwei Schrauben 5 gegeneinander verspannt sind.

Die Schellenteile 1 sind im Ausführungsbeispiel aus Polypropylen (PP) hergestellt und weisen einen im Wesentlichen quaderförmig ausgebildeten und mit abgerundeten Ecken versehenen Grundkörper auf, in den mittig in Querrichtung eine halbzylinderförmige Ausnehmung 11 eingeformt ist. In der Ausnehmung 11 sind gegenüberliegend beabstandet zueinander zwei Rippen 12 angeordnet, welche sich in Axialrichtung der Ausnehmung 11 erstrecken. Die Rippen 12 sind aus einem Elastomer gebildet. Zur Vermeidung von Korrosion an den Kontaktflächen der Rippen 12 mit einem - nicht dargestellten - Rohr kann das Elastomer mit einem Korrosionsschutz-Additiv in Form eines flüchtigen Korrosionshemmers (VCI) versetzt sein. Selbstverständlich können die Rippen auch aus demselben Material wie die Schellenteile gebildet sein.

In die Schellenteile 1 sind zu beiden Seiten der Ausnehmung 11 gegenüberliegend zwei Bohrungen 13 eingebracht. Die Bohrungen 13 dienen der Durchführung der Schrauben 5 zur Verspannung der beiden Schellenteile 1 gegen ein zwischen den Ausnehmungen 11 anzuordnendes - nicht dargestelltes - Rohr. Weiterhin sind beidseitig der Bohrungen 13 Aussparungen 14 eingebracht. Diese Aussparungen 14 dienen der Materialersparnis sowie der Gewichtsreduktion der Schellenteile 1.

Im Ausführungsbeispiel weist die durch die Ausnehmungen 11 gebildete Durchführung 10 vier Rippen 12 auf, zwischen denen das - nicht dargestellte - Rohr einspannbar ist. Alternativ können auch lediglich drei Rippen vorgesehen sein, die auf die beiden Rohrschellenteile 1 verteilt sind und dabei bevorzugt um jeweils 120 ° versetzt zueinander angeordnet sind. Selbstverständlich ist auch die Anordnung von mehr als vier Rippen möglich. Dabei ist jedoch zu bedenken, dass die Gesamtkontaktflächen zwischen den Schellenteilen 1 und dem einzuspannenden Rohr mit der Anzahl der Rippen steigt, wodurch die Korrosionsgefahr erhöht ist.

Der Erdungsleiter 2 ist im Ausführungsbeispiel in Form einer Klammer mit rechteckigem Querschnitt ausgebildet, die das Schellenteil 1 mittig umfassend durch dessen Ausnehmung 11 zwischen den Rippen 12 verlaufend angeordnet ist. Die beiden Enden der Klammer sind in einen in der Ausnehmung 11 angeordneten Eingriff 111 eingerastet, wodurch der Erdungsleiter 2 form- und kraftschlüssig mit dem Schellenteil 1 verbunden ist. Der Erdungsleiter 2 ist im Ausführungsbeispiel aus einem kupferlegierten Federstahl mit guter elektrischer Leitfähigkeit hergestellt.

Im Bereich der Ausnehmung 11 des Schellenteils 1 können in dem Erdungsleiter 2 mehrere, insbesondere zwei beabstandet zueinander angeordnete bogenförmige Erhebungen vorhanden sein, um den Kontakt zu einem aufgenommenen Rohr möglichst gering zu halten und an den Kontaktflächen einen möglichst großen Anpressdruck zu erzeugen.

Die Montageplatte 3 ist aus Metall hergestellt und weist im Wesentlichen eine der Deckfläche 15 des ihr zugewandten Schellenteils 1 entsprechende Grundfläche auf. Auf der Montageplatte 3 sind beabstandet zueinander zwei Schweißmuttern 31 zum Einschrauben der Schrauben 5 angeordnet, die mit den Bohrungen 13 der Schellenteile 1 fluchten.

Die ebenfalls aus Metall hergestellte Spannplatte 4 weist ebenfalls eine im Wesentlichen der Deckfläche 15 des ihr zugewandten Schellenteils 1 entsprechende Grundfläche auf. In die Spannplatte 4 sind beabstandet zueinander zwei Bohrungen 41 eingebracht, die mit den Bohrungen 13 des Schellenteils 1 fluchten.

Zur Montage eines - nicht dargestellten - Rohrs wird die Montageplatte 3 an eine metallische Befestigungsstruktur angebracht, insbesondere angeschweißt. Anschließend wird ein erstes Schellenteil 1 mit seinen Bohrungen auf 13 die Schweißmuttern 31 der Montageplatte 3 aufgestülpt. Hierzu weisen die Bohrungen 13 an ihrem der Ausnehmung 11 des Schellenteils 1 abgewandten Ende einen durchmessererweiterten Abschnitt 131 auf, dessen Außendurchmesser im Wesentlichen dem Außendurchmesser der Schweißmutter 31 entspricht.

Nach Einlegen des - nicht dargestellten - Rohres in die Ausnehmung 11 des ersten Schellenteils 1 wird das andere, zweite Schellenteil1 mit seiner Ausnehmung 11 auf das Rohr aufgesetzt, wonach die Spannplatte 4 auf das zweite Schellenteil 1 aufgelegt wird. Sodann werden die Schrauben 5 durch die Bohrungen 41 der Spannplatte und die Bohrungen 13 der Schellenteile 1 hindurchgeführt und in die Schweißmuttern 31 der Montageplatte eingeschraubt, wodurch die beiden Schellenteile 1 gegen das Rohr verspannt werden. Die Erdungsleiter 2 der Schellenteile 1 liegen dabei an dem Rohr sowie auch an der metallischen Montageplatte 3 bzw. der metallischen Spannplatte 4 an und sind elektrisch mit diesen verbunden. Die metallische Spannplatte 4 ist über die Schrauben 5 mit der Montageplatte elektrisch verbunden, die wiederum mit der Befestigungsstruktur elektrisch verbunden ist. Das Rohr ist auf diese Weise über die erfindungsgemäße Vorrichtung geerdet, ohne dass es einer separaten Erdungsleitung bedarf.

## Patentansprüche

1. Vorrichtung zur Befestigung eines Rohres, insbesondere für Rohrleitungen im Bereich von Offshore- und Onshore-Ölgewinnungsanlagen, umfassend zwei korrespondierende, im Wesentlichen aus Kunststoff hergestellte, miteinander verbindbare, blockförmige Schellenteile (1), die Ausnehmungen (11) aufweisen, welche im montierten Zustand eine Durchführung (10) ausbilden, **dadurch gekennzeichnet, dass** wenigstens eine der beiden Schellenteile (1) mit einem elektrisch leitenden Erdungsleiter (2) versehen ist, der in die Ausnehmung hineinragt (11) und sich bis auf die der Ausnehmung (11) gegenüberliegende Deckfläche (15) erstreckt.

2. Vorrichtung nach Anspruch 1, **dadurch gekennzeichnet, dass** die blockförmigen Schellenteile (1) in der Ausnehmung Erhebungen zur Anlage an einem aufzunehmenden Rohr auf, die vorzugsweise als Längsrippen ausgebildet sind.

3. Vorrichtung nach Anspruch 1 oder 2, **dadurch gekennzeichnet, dass** der Erdungsleiter (2) aus einem federnden Metall hergestellt ist und im Bereich der Ausnehmung (11) wenigstens eine federnde Erhebung aufweist.

4. Vorrichtung nach einem der vorgenannten Ansprüche, **dadurch gekennzeichnet, dass** der Erdungsleiter (1) zumindest bereichsweise einen rechteckigen Querschnitt aufweist.

5. Vorrichtung nach einem der vorgenannten Ansprüche, **dadurch gekennzeichnet, dass** sich der Erdungsleiter (2) in Längsrichtung zumindest bereichsweise, vorzugsweise über die gesamte Länge der Ausnehmung (11) erstreckt.

6. Vorrichtung nach einem der vorgenannten Ansprüche, **dadurch gekennzeichnet, dass** der Erdungsleiter (2) in Art einer Klammer ausgebildet ist, welche die Deckfläche (15) und die sich daran anschließenden Seiten des Schellenteils (1) zumindest bereichsweise einfassend mit dem Schellenteil (1) verbunden ist.

7. Vorrichtung nach einem der vorgenannten Ansprüche, **dadurch gekennzeichnet, dass** die beiden Schellenteile (1) wenigstens eine zueinander fluchtende Bohrung (13) zur Durchführung einer Schraube (5) aufweisen, wobei ein zumindest bereichsweise metallisches Montagebauteil zur Befestigung an einer Befestigungsstruktur angeordnet ist, an dem der Erdungsleiter (2) elektrisch verbindend anliegt und das wenigstens ein Innengewinde zum Einschrauben einer Schraube (5) aufweist.

8. Vorrichtung nach Anspruch 7, **dadurch gekennzeichnet, dass** das Montagebauteil durch eine Montageplatte (3) gebildet ist, die wenigstens ein Innengewinde zum Einschrauben einer Befestigungsschraube (5) aufweist.

9. Vorrichtung nach Anspruch 7, **dadurch gekennzeichnet, dass** das Montagebauteil durch eine C-Profilschiene gebildet ist, die wenigstens einen ein Innengewinde zum Einschrauben einer Befestigungsschraube aufweisenden Nutenstein aufnimmt.

10. Vorrichtung nach einem der Ansprüche 7 bis 9 **dadurch gekennzeichnet, dass** dem Montagebauteil gegenüberliegend eine Spannplatte (4) angeordnet ist, die wenigstens eine Bohrung (41) aufweist, die mit dem wenigstens einen Innengewinde des Montagebauteils fluchtet, wobei die beiden Schellenteile (1) zwischen der Spannplatte (4) und dem Montagebauteil gegeneinander verspannt sind.

11. Befestigungsanordnung, umfassend ein Rohr, das in der Durchführung (10) zwischen den beiden Schellenteilen (1) wenigstens einer Vorrichtung nach einem der vorgenannten Ansprüche gehalten ist, wobei der Erdungsleiter (2) wenigstens eines der Schellenteile (1) einer Vorrichtung an dem Rohr anliegt.

12. Befestigungsanordnung nach Anspruch 11, **dadurch gekennzeichnet, dass** der Erdungsleiter (2) federnd gegen das Rohr vorgespannt ist.

## Geänderte Patentansprüche

### Geänderte Patentansprüche gemäss Regel 137(2) EPÜ.

1. Vorrichtung zur Befestigung eines Rohres, insbesondere für Rohrleitungen im Bereich von Offshore- und Onshore-Ölgewinnungsanlagen, umfassend zwei korrespondierende, im Wesentlichen aus Kunststoff hergestellte, miteinander verbindbare, blockförmige Schellenteile (1), die Ausnehmungen (11) aufweisen, welche im montierten Zustand eine Durchführung (10) ausbilden, wobei wenigstens eine der beiden Schellenteile (1) mit einem elektrisch leitenden Erdungsleiter (2) versehen ist, der in die Ausnehmung hineinragt (11) und sich bis auf die der Ausnehmung (11) gegenüberliegende Deckfläche (15) erstreckt, **dadurch gekennzeichnet, dass** der Erdungsleiter (2) aus einem federnden Metall hergestellt ist und im Bereich der Ausnehmung (11) wenigstens eine federnde Erhebung aufweist.

2. Vorrichtung nach Anspruch 1, **dadurch gekennzeichnet, dass** die blockförmigen Schellenteile (1) in der Ausnehmung Erhebungen zur Anlage an einem aufzunehmenden Rohr auf, die vorzugsweise als Längsrippen ausgebildet sind.

3. Vorrichtung nach einem der vorgenannten Ansprüche, **dadurch gekennzeichnet, dass** der Erdungsleiter (1) zumindest bereichsweise einen rechteckigen Querschnitt aufweist.

4. Vorrichtung nach einem der vorgenannten Ansprüche, **dadurch gekennzeichnet, dass** sich der Erdungsleiter (2) in Längsrichtung zumindest bereichsweise, vorzugsweise über die gesamte Länge der Ausnehmung (11) erstreckt.

5. Vorrichtung nach einem der vorgenannten Ansprüche, **dadurch gekennzeichnet, dass** der Erdungsleiter (2) in Art einer Klammer ausgebildet ist, welche die Deckfläche (15) und die sich daran anschließenden Seiten des Schellenteils (1) zumindest bereichsweise einfassend mit dem Schellenteil (1) verbunden ist.

6. Vorrichtung nach einem der vorgenannten Ansprüche, **dadurch gekennzeichnet, dass** die beiden Schellenteile (1) wenigstens eine zueinander fluchtende Bohrung (13) zur Durchführung einer Schraube (5) aufweisen, wobei ein zumindest bereichsweise metallisches Montagebauteil zur Befestigung an einer Befestigungsstruktur angeordnet ist, an dem der Erdungsleiter (2) elektrisch verbindend anliegt und das wenigstens ein Innengewinde zum Einschrauben einer Schraube (5) aufweist.

7. Vorrichtung nach Anspruch 6, **dadurch gekennzeichnet, dass** das Montagebauteil durch eine Montageplatte (3) gebildet ist, die wenigstens ein Innengewinde zum Einschrauben einer Befestigungsschraube (5) aufweist.

8. Vorrichtung nach Anspruch 6, **dadurch gekennzeichnet, dass** das Montagebauteil durch eine C-Profilschiene gebildet ist, die wenigstens einen ein Innengewinde zum Einschrauben einer Befestigungsschraube aufweisenden Nutenstein aufnimmt.

9. Vorrichtung nach einem der Ansprüche 6 bis 8 **dadurch gekennzeichnet, dass** dem Montagebauteil gegenüberliegend eine Spannplatte (4) angeordnet ist, die wenigstens eine Bohrung (41) aufweist, die mit dem wenigstens einen Innengewinde des Montagebauteils fluchtet, wobei die beiden Schellenteile (1) zwischen der Spannplatte (4) und dem Montagebauteil gegeneinander verspannt sind.

10. Befestigungsanordnung, umfassend ein Rohr, das in der Durchführung (10) zwischen den beiden Schellenteilen (1) wenigstens einer Vorrichtung nach einem der vorgenannten Ansprüche gehalten ist, wobei der Erdungsleiter (2) wenigstens eines der Schellenteile (1) einer Vorrichtung an dem Rohr anliegt.

11. Befestigungsanordnung nach Anspruch 10, **dadurch gekennzeichnet, dass** der Erdungsleiter (2) federnd gegen das Rohr vorgespannt ist.
